# EUROPEAN PATENT APPLICATION

(11) **EP 4 635 879 A1**
(43) Date of publication of application: **22.10.2025**
(21) Application number: 25170568.7
(22) Date of filing: 15.04.2025
(51) Int. Cl.: B65G 1/04, B65G 1/137

(54) **STORAGE SYSTEM**

(30) Priority: 19.04.2024 FI 20245504
(71) Applicant: Nekos Oy, 33720 Tampere (FI)
(72) Inventor: Niemi, Jouni, 33720 Tampere (FI)
(74) Representative: Kolster Oy Ab

(57) **Abstract**

A storage system (10) for loading and unloading storage units (20) stored in successive rows (21) positioned in a storage (1). The storage system (10) comprises at least one crosswise conveyor (11) movable perpendicular to its own longitudinal direction. In response to a free area for a single complete row (21) of storage units (20) being available right next to the crosswise conveyor (11) on opposite sides of the crosswise conveyor (11) in the longitudinal direction thereof, a control system (40) is configured to control the operation of a handling mechanism (30) on the crosswise conveyor (11) to position the storage units (20) on opposite sides of the crosswise conveyor (11) either in one row (21) on one side of the crosswise conveyor (11) at a time, or in a specified order to opposite positions in the rows (21) on opposite sides of the crosswise conveyor (11) to increase a degree of filling of the storage (1).

## Description

### FIELD OF THE INVENTION

The invention relates to a storage system for loading into a storage and unloading from the storage storage units to be stored in successive rows positioned on a base of the storage.

### BACKGROUND OF THE INVENTION

EP-publication 3453646 A1 discloses a storage system for loading into the storage and unloading from the storage storage units to be stored in successive rows positioned on a base of a storage. The storage system comprises a lengthwise conveyor for carrying storage units to be loaded into the storage and to be unloaded from the storage. The storage system further comprises a crosswise conveyor for carrying the storage units. The crosswise conveyor is substantially perpendicular to the lengthwise conveyor and connected at its one end substantially at the same vertical level to the lengthwise conveyor, whereby the storage units may be moved between the lengthwise conveyor and the crosswise conveyor. The crosswise conveyor is further substantially parallel to said storage unit rows in a horizontal direction and movable directly above said base of the storage in a direction substantially parallel with a plane of the base and perpendicular to its own longitudinal direction. The storage system further comprises a handling mechanism, or a manipulator, with which said crosswise conveyor is provided and which handling mechanism is movable in the longitudinal direction of the crosswise conveyor. The handling mechanism comprises handling means, or a grasper or a grasper device, for grasping the storage unit for carrying the storage unit from the crosswise conveyor into the row of the storage units on one side of the crosswise conveyor next to the crosswise conveyor, or vice versa, to unload it to the crosswise conveyor from the row of the storage units on one side of the crosswise conveyor next to the crosswise conveyor.

The handling mechanism comprises a fixed bar that extends substantially perpendicularly to the crosswise conveyor over opposite side edges of the crosswise conveyor up to areas intended for the rows of the storage units right next to the crosswise conveyor. The handling means for grasping the storage unit is arranged to move along that bar up to the areas intended for the rows of the storage units right next to the crosswise conveyor for loading the storage unit into the row of the storage units next to the crosswise conveyor or to unload the storage unit from the row of the storage units next to the crosswise conveyor. The storage system further comprises a control unit for controlling the operation of the lengthwise conveyor, the crosswise conveyor, and the handling mechanism in the crosswise conveyor.

The solution of EP 3453646 A1 discloses a storage system that has been proved to be practical and useful for varying needs of storages.

However, the storage system of EP 3453646 A1 has a disadvantage relating to an achievable degree of filling of the storage. In the storage system of EP 3453646 A1 the loading of the storage with the storage units is started from either one or both ends of a range of movement of the crosswise conveyor. When the storage is becoming full, and the last row of the storage units has been laid on the base of the storage on the area next to the crosswise conveyor on one side of the crosswise conveyor, there remains on the opposite side of the crosswise conveyor still a free area which could accommodate one more row of storage units, as is schematically visible for example on the right-hand side of Figure 3 in EP 3453646 A1. The storage system of EP 3453646 A1 is, however, unable to fill this empty area because of the handling mechanism being unable to move along the crosswise conveyor anymore.

### BRIEF DESCRIPTION OF THE INVENTION

An object of the present invention is to provide a novel storage system. The invention is characterized by the features of the independent claim.

The invention is based on an idea of controlling the operation of the storage system in versatile manners during loading of the storage units into the storage in response to a free area for a single row of storage units being available right next to the crosswise conveyor on opposite sides of the crosswise conveyor in the longitudinal direction thereof. The control system is configured to control the operation of the at least one handling mechanism to position the storage units on opposite sides of the crosswise conveyor either in one row on one side of the crosswise conveyor at a time, or in a specified order to opposite positions in the rows on opposite sides of the crosswise conveyor.

An advantage of the invention is an increase in a degree of filling of the storage when compared to the prior art storage system.

Some embodiments of the invention are disclosed in the dependent claims.

### BRIEF DESCRIPTION OF THE DRAWINGS

In the following the invention will be described in greater detail by means of preferred embodiments with reference to the accompanying drawings, in which
Figure 1 is a schematic perspective view of a storage system at an oper-ating situation of the storage system;
Figure 2 is a schematic top view of the storage system of Figure 1 at another operating situation of the storage system;
Figures 3a and 3b show schematically from above the storage system of Figures 1 and 2 at two different operating situations;
Figures 4 and 5 show schematically, and obliquely from above, a second storage system;
Figure 6 is a schematic top view of the storage system of Figures 4 and 5 at an operating situation.

For the sake of clarity, the figures show some embodiments of the invention in a simplified manner. Like reference signs identify like elements in the figures.

### DETAILED DESCRIPTION OF THE INVENTION

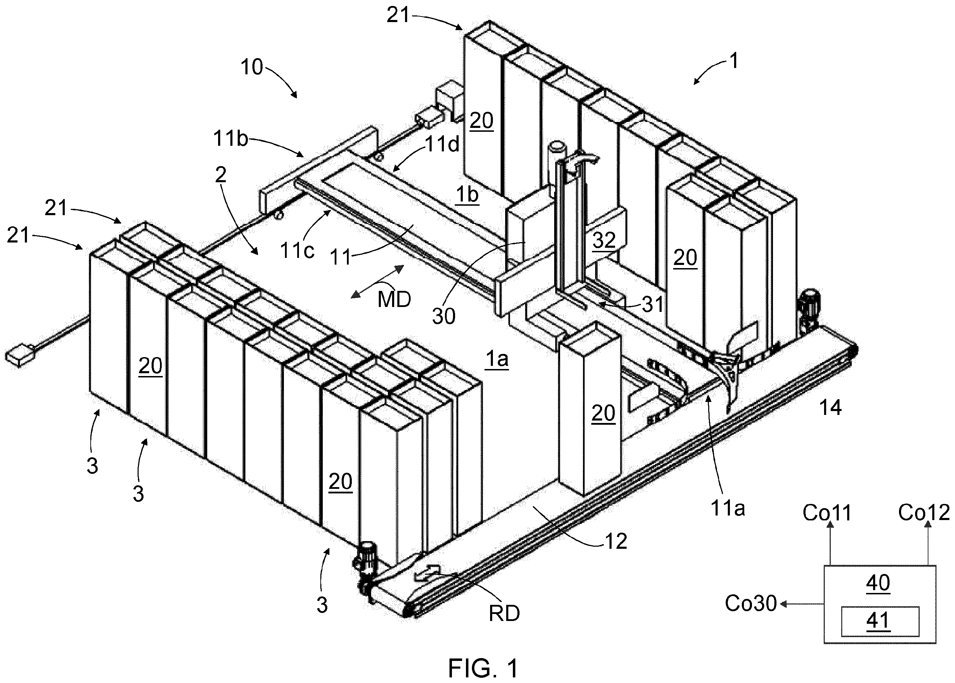

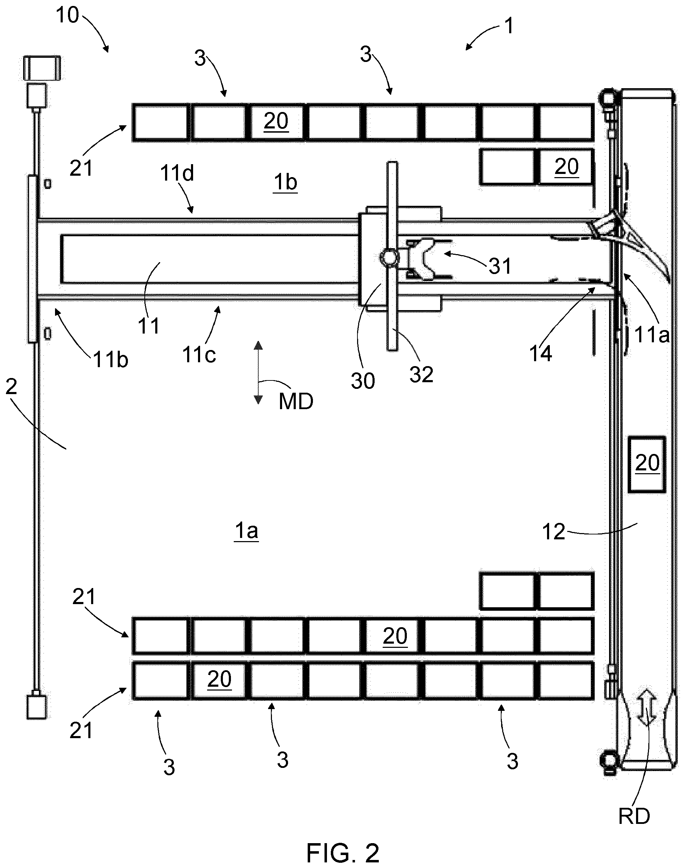

Figure 1 shows schematically, at an operating situation, a perspective view of a storage system 10 for loading and unloading storage units 20 in a single level storage 1. Figure 2 shows schematically a top view of the storage system 10 of Figure 1.

The storage system 10 is intended to be operated at a so-called single level storage 1, that comprises a rigid, substantially horizontal base 2, such as a floor of a space of the storage 1. The term "substantially horizontal" refers herein not only an absolutely horizontal plane but also planes that are somewhat slanted, for example for leading water in a predetermined direction. The structure of the base may for example be solid, railed, grating, lattice etc.

The storage 1 is used for storing the storage units 20 in a form of successive rows 21 positioned on the base 2 of the storage 1. The storage unit 20 may for example be a case, a container, a crate, a box, a barrel etc. According to an embodiment, the storage unit 20 may be a pile of two or more sub-storage units, wherein the sub-storage unit may be a case, a container, a crate, a box, a barrel etc.

The storage system 10 comprises at least one crosswise conveyor 11, i.e., one or more crosswise conveyors 11. In the embodiment of the figures there is only one crosswise conveyor 11. The crosswise conveyor 11 is a conveyor having a fixed length, such as a roller conveyor or a belt conveyor which has, in a longitudinal direction thereof, a first end 11a and a second end 11b. The crosswise conveyor 11 is intended to carry the storage units 20 to one or more rows 21 in the storage 1, to one row 21 at a time, for loading the storage units 20 into the storage 1. Similarly, the crosswise conveyor 11 is intended to carry the storage units 20 from the one or more rows 21 in the storage 1, from one row 21 at a time, for unloading the storage units 20 from the storage 1. The crosswise conveyor 11 is arranged parallel to the rows 21 of the storage units 20 and directly above said base 2. The crosswise conveyor 11 is movable in a direction substantially parallel with a plane of the base 2 above the base 2 and substantially perpendicular to a longitudinal direction of the crosswise conveyor 11. The direction of the possible movement of the crosswise conveyor 11 is shown schematically in Figures 1 and 2 with a double-ended arrow denoted with the reference sign MD. Thus, the crosswise conveyor 11 may always assume a specific position relative to a space of the row 21 of the storage units 20 to be handled next.

The crosswise conveyor 11 is provided with a handling mechanism 30 that can be moved in the longitudinal direction of the crosswise conveyor 11. The handling mechanism 30 is provided with a handling means 31 for grasping the storage unit 20 and for carrying it from the crosswise conveyor 11 into one of the rows 21 of the storage units 20, or vice versa, from one of the rows 21 of the storage units 20 onto the crosswise conveyor 11. In case of the storage unit 20 comprising a pile of the sub-storage units, the handling mechanism 30 is arranged to carry the whole pile into one of the rows 21 of the storage units 20, or the whole pile from one of the rows 21 of the storage units 20 onto the crosswise conveyor 11.

The handling mechanism 30 comprises a fixed bar 32 that extends substantially perpendicularly to the crosswise conveyor 11 over a first side edge 11c and a second side edge 11d of the crosswise conveyor 11 up to areas intended for rows 21 of storage units 20 right next to the crosswise conveyor 11. The areas are either free to receive a complete row 21 of the storage units 20 or are already partly accommodated by a row 21 of the storage units 20. The handling means 31 are arranged to move along the bar 32 in a direction substantially perpendicular to the longitudinal direction of the crosswise conveyor 11 up to the area next to the crosswise conveyor 11 on either side of the crosswise conveyor 11 to carry the storage unit 20 from the crosswise conveyor 11 to the row 21 of the storage units 20 or to carry the storage unit 20 from the row 21 of the storage units 20 to the crosswise conveyor 11.

The at least one crosswise conveyor 11 divides, in the longitudinal direction thereof, the storage 1 into at least two storage areas, that remain on opposite sides of the respective crosswise conveyor 11 relative to its longitudinal direction. Thus, in the embodiment of the figures, the single crosswise conveyor 11 divides the storage 1 into two storage areas 1a, 1b, i.e., the first storage area 1a and the second storage area 1b.

A size or an area of each storage area 1a, 1b is arranged to change dynamically in response to the operational position of the crosswise conveyor 11 in the storage 1, i.e., depending on an operating situation of the storage system 10, i.e., depending on into which storage area 1a, 1b the storage units 20 to be stored in the storage 1 are to be loaded and/or from which storage area 1a, 1b the storage units 20 to be removed from the storage 1 are to be unloaded. In the embodiment of Figures 1 and 2 the first storage area 1a comprises two full rows 21 of the storage units 20 and one partial row 21 of the storage units 20, and the second storage area 1b comprises one full row 21 of the storage units 20, and one partial row 21 of the storage units 20. In the operating situation of Figures 1 and 2 the storage system 10 is operated at the second storage area 1b and the area of the second storage area 1b is arranged to increase and the area of the first storage area 1a is arranged to decrease in response to the storage units 20 being loaded into the second storage area 1b.

The storage system 10 comprises also at least one lengthwise conveyor 12, i.e., one or more lengthwise conveyors 12. In the embodiment of the figures there is only one lengthwise conveyor 12. The crosswise conveyor 11 is connected at its first end 11a to the lengthwise conveyor 12 substantially at the same vertical level with the lengthwise conveyor 12 for allowing the storage units 20 to be moved between the lengthwise conveyor 12 and the crosswise conveyor 11. At an intersection of the crosswise conveyor 11 and the lengthwise conveyor 12 there is a guide element 14 that guides the movement of the storage units 20 between the crosswise conveyor 11 and the lengthwise conveyor 12. Other implementations for providing the guiding of the movement of the storage units 20 between the crosswise conveyor 11 and the lengthwise conveyor 12 are, however, possible.

According to an embodiment, the lengthwise conveyor 12 is a conveyor having a fixed length, such as a roller conveyor or a belt conveyor. According to another embodiment, the lengthwise conveyor 12 is a conveyor the length of which is variable, such as a telescopic conveyor. According to still another embodiment, the lengthwise conveyor 12 is a transfer car or an automatic guided vehicle.

The storage units 20 may be moved in the storage system 10 and in the storage 1 as follows, referring especially to Figures 1 and 2.

The lengthwise conveyor 12 is adapted to supply the storage units 20 coming from the left as shown in Figure 1 or from the lower part as shown in Figure 2 for loading the storage units 20 in the storage 1. The running direction of the lengthwise conveyor 12 is thus assumed to be from left to right in Figure 1 or from down to up in Figure 2. The running direction may also be changed at need, as it is schematically shown with a double-ended arrow RD indicating the possible running direction of the lengthwise conveyor 12.

The guide element 14 guides the storage unit 20 travelling along the lengthwise conveyor 12 to the crosswise conveyor 11. The crosswise conveyor 11 runs from the first end 11a of the crosswise conveyor 12 towards the second end 11b of the crosswise conveyor 11 and transfers the storage unit 20 along the crosswise conveyor 11 up to the position of the handling mechanism 30 on the crosswise conveyor 11. The handling mechanism grasps to the storage unit 20 by the handling means 31 and loads the storage unit 20 from the crosswise conveyor 11 to one of the rows 21 of the storage units 20 in the second storage area 1b next to the crosswise conveyor 11 on the side of the second side edge 11d of the crosswise conveyor 11.

When unloading the storage units 20 from the storage 1, the operation of the storage system 10 is opposite, whereby the storage units 20 to be unloaded from the storage 1 also exit the storage system 10 from the left end of the lengthwise conveyor 12 in Figure 1 or from the lower end of the lengthwise conveyor 12 in Figure 2. Thus, according to an operation embodiment of the storage system 10 disclosed herein, the storage units 20 outgoing from the storage 1 exit the storage system 10 from the same end of the lengthwise conveyor 12 wherein the storage units 20 enter the storage system 10. However, according to an alternative operation embodiment of the storage system 10, the storage units 20 outgoing from the storage 1 may exit from the storage system 10 through the opposite end of the lengthwise conveyor 12 relative to the end of the lengthwise conveyor 12 wherein the storage units 20 enter the storage system 10. In this alternative operation embodiment of the storage system 10, the position of the guide element 14 is changed, when necessary, appropriately to guide the incoming storage units 20 onto the crosswise conveyor 11 and the outgoing storage units 20 onto the lengthwise conveyor 12.

The storage 1 of Figures 1 and 2 comprises a single storage system 10. A storage of a very large area may also comprise two or more storage systems 10, that may be separate from each other or combined with each other for co-operating with each other.

The operation of the storage system 10, and thereby a storage unit traffic in the storage 1, is controlled by a control system 40. The control system 40 may substantially automatically control for example the operation of the crosswise conveyor 11, the handling mechanism 30 and the lengthwise conveyor 12 through respective control signals Co11, Co12, Co30. The control system 40 is shown schematically in Figure 1.

The control system 40 may be implemented for example by a programmable logic controller (PLC), a personal computer (PC), an artificial intelligence, a microcontroller, a relay arrangement, a numerical control (NC), a mobile device etc., or as a combination of one or more of these. The control system 40 may comprise a memory or the control system 40 may be operationally connected to a memory external to the control system 40. The memory is intended to store programs or other information used in the control of the storage system 10 and is accessible at least by the control system 40.

The control system 40 may be configured to control only the operation of a single storage system 10, whereby, in case of a storage comprising two or more storage systems 10, there is a dedicated control system 40 for each storage system 10. According to another embodiment, the operation of two or more storage systems 10 that are located either at same or even at different locations, may be controlled by a common control system 40. Furthermore, according to an embodiment, the control system 40 may be an ERP (Enterprise Resource Planning) -system or the control system 40 may be some part of an ERP-system or only connected to the ERP-system, which is configured to control an operation of a complete industrial or storing plant. In the last-mentioned option, the ERP-system may thus provide a control system having a higher priority than the control system 40 dedicated for the specific storage system 10.

Impulse signals to the control system 40 for starting the control of the operation of the storage system(s) 10 in a specific expected way may be received for example from an operator of the storage system 10, from a system of a transportation company transporting the storage units or from an event taking place in a production of an industrial plant or from a production plan of an industrial plant and received by the control unit 40 from the ERP-system of the industrial plant. The control system 40 may thus comprise an input/output unit 41 for communicating with the operator of the storage system 10 or with the system external to the storage system 10. The input/output unit 41 may thus comprise a user interface provided with a display and keyboard or some other means for the operator of the storage system 10 to communicate with the control system 40.

To avoid a problem occurring in the prior art storage system discussed above, i.e., to avoid leaving a free area without any storage units 20 on any side of the crosswise conveyor 11 in the longitudinal direction thereof in the storage system 10 of Figures 1 and 2, in response to a free area for a single row 21 of the storage units 20 being available right next to the crosswise conveyor 11 on opposite sides of the crosswise conveyor 11 in the longitudinal direction thereof during loading of the storage units 20 into the storage 1, the control system 40 is configured to control the operation of the handling mechanism 30 to position the storage units 20 in a specified order to opposite positions in rows on opposite sides of the crosswise conveyor 11 to increase a degree of filling of the storage 1. In other words, in response to there being free areas able to receive the single complete row 21 of the storage units 20 on opposite sides of the crosswise conveyor 11 in the longitudinal direction thereof during loading of the storage units 20 into the storage 1, the control system 40 is configured to control the operation of the handling mechanism 30 to position the storage units 20 in a specified order to the opposite positions in the rows on the opposite sides of the crosswise conveyor 11 to increase a degree of filling of the storage 1.

To implement the handling mechanism 30 to position the storage units 20 in a specified order to the opposite positions on the opposite sides of the crosswise conveyor 11 in the storage system of Figures 1 and 2 during loading of the storage units 20 into the storage 1, the control system 40 is configured, in response to free areas for single rows 21 of the storage units 20 being available right next to the crosswise conveyor 11 on the opposite sides of the crosswise conveyor 11 in the longitudinal direction thereof:
- to control the handling mechanism 30 to receive a first storage unit 20 travelling on the crosswise conveyor 11 by the handling means 31 positioned at the crosswise conveyor 11,
- to control the handling mechanism 30 to move the received first storage unit 20 from the crosswise conveyor 11 to the free area on one side of the crosswise conveyor 11 preferably starting substantially at the first end 11a of the crosswise conveyor 11,
- to control the handling mechanism 30 to move towards the second end 11b of the crosswise conveyor 11 until the handling means 31 are detached from the first storage unit 20 loaded on the said side of the crosswise conveyor 11,
- to control the handling mechanism 30 to return the handling means 31 back at the crosswise conveyor 11 to receive a second storage unit 20 travelling on the crosswise conveyor 11,
- to control the handling mechanism 30 to receive the second storage unit 20 travelling on the crosswise conveyor 11,
- to control the handling mechanism 30 to move the received second storage unit 20 from the crosswise conveyor 11 to the free area on an opposite side of the crosswise conveyor 11 substantially oppositely to the first storage unit 20 loaded into the storage 1,
- to control the handling mechanism 30 to move towards the second end 11b of the crosswise conveyor 11 until the handling means 31 are detached from the second storage unit 20 loaded on the said opposite side of the crosswise conveyor 11, and
- to control the handling mechanism 30 to return the handling means 31 back at the crosswise conveyor 11 for receiving a next storage unit 20 to be loaded into the storage 1.

In the storage system of Figures 1 and 2, wherein the storage units 20 are positioned in a specified order to the opposite positions in the rows on the opposite sides of the crosswise conveyor 11, the control system 40 is configured to control the handling mechanism 30 to continue the loading of the storage units 20 to the opposite positions in the rows on the opposite sides of the crosswise conveyor 11 such that at any time there is a maximum of one storage unit 20 difference in the number of the storage units 20 on the opposite sides of the crosswise conveyor 11.

According to an embodiment of the storage system of Figures 1 and 2, wherein at any time there is the maximum of one storage unit 20 difference in the number of the storage units 20 on the opposite sides of the crosswise conveyor 11, the control system 40 is configured to, after receiving the first storage unit 20 travelling on the crosswise conveyor 11 by the handling means 31 positioned at the crosswise conveyor 11, to continue the loading of the next storage units 20 such that always two consecutive storage units 20 will be positioned on the same side of the crosswise conveyor 11 before the next two storage units 20 will be positioned on the opposite side of the crosswise conveyor 11. The control system 40 is configured to control the handling mechanism 30 to continue the loading of the storage units 20 to the free areas on both sides of the crosswise conveyor 11 until the free areas for the row 21 of the storage units 20 on both sides of the crosswise conveyor 11 are filled with the storage units 20, or until all the storage units 20 to be loaded into the storage 1 have been loaded into the storage 1.

According to an embodiment of the storage system of Figures 1 and 2, wherein at any time there is the maximum of one storage unit 20 difference in the number of the storage units 20 on the opposite sides of the crosswise conveyor 11, the handling mechanism 30 is arranged to load the storage units 20 in turns on both sides of the crosswise conveyor 11 in the longitudinal direction thereof. According to this embodiment the control system 40 is configured to control the handling mechanism 30 to continue the loading of the storage units 20 in turns to the free areas to the opposite positions on both sides of the crosswise conveyor 11 until the free areas for the row 21 of the storage units 20 on both sides of the crosswise conveyor 11 are filled with the storage units 20, or until all the storage units 20 to be loaded into the storage 1 have been loaded into the storage 1.

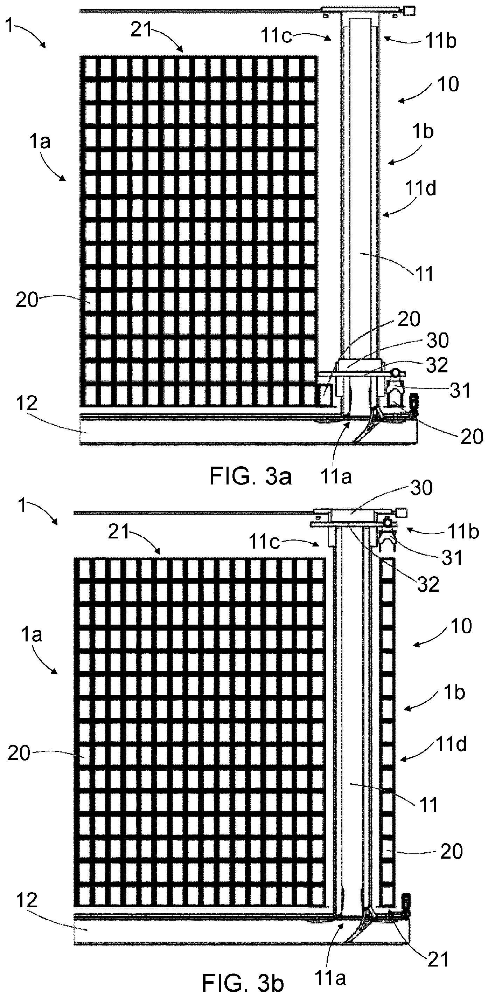

The embodiments of the storage system of Figures 1 and 2 to increase the degree of filling of the storage 1 is clarified by Figures 3a and 3b. Figure 3a schematically discloses from above the loading of the storage units 20 into the storage 1 at an operating situation of the storage system 10, wherein the storage 1 is already full of the storage units 20 except for the free area right next to the crosswise conveyor 11 on the side of the first side edge 11c of the crosswise conveyor 11, i.e., on the side of the first storage area 1a, and except for the free area right next to the crosswise conveyor 11 on the side of the second side edge 11d of the crosswise conveyor 11, i.e., on the side of the second storage area 1b. These free areas both can still receive one row 21 of the storage units 20. In the operating situation of Figure 3a, it is also shown one storage unit 20 already loaded on the side of the first side edge 11c of the crosswise conveyor 11 at the first end 11a of the crosswise conveyor 11 and another storage unit 20 to be loaded on the side of the second side edge 11d of the crosswise conveyor 11 at the first end 11a of the crosswise conveyor 11, i.e., at a position opposite to the storage unit 20 having already been loaded on the side of the first side edge 11c of the crosswise conveyor 11. Figure 3b schematically discloses from above the storage 1 at an operating situation of the storage system 10, wherein the areas right next to the crosswise conveyor 11 on both sides of the crosswise conveyor 11 in the longitudinal direction thereof, which areas were originally free of the storage units 20, have been completely filled with the storage units 20. The storage system 10 disclosed thus provides the increase of the degree of filling of the storage 1 relative to the prior art storage system.

In the embodiment of Figures 1, 2, 3a and 3b the control system 40 may comprise for the loading of the storage units 20 into the storage 1 two operation modes, i.e., a first operation mode configured to control the storage system 10 until there is the free area for only the single complete row 21 of the storage units 20 available right next to the crosswise conveyor 11 on opposite sides of the crosswise conveyor 11 in the longitudinal direction thereof, and a second operation mode configured to control the storage system 10 after receiving an indication that there is the free area for only the single complete row 21 of the storage units 20 available right next to the crosswise conveyor 11 on opposite sides of the crosswise conveyor 11 in the longitudinal direction thereof. The first operation mode is applied as long as there is plenty of space available in the storage 1 to receive the storage units 20 to be loaded into the storage 1. In response to the storage 1 being almost full of the storage units 20, i.e., in response to the free areas for only the single complete rows 21 of the storage units 20 being available right next to the crosswise conveyor 11 on opposite sides of the crosswise conveyor 11 in the longitudinal direction thereof, the second operation mode of the storage system 10 overrides the first operation mode to control the loading of the storage system 10 into the storage 1 in a predetermined manner maximizing the degree of filling of the storage 1.

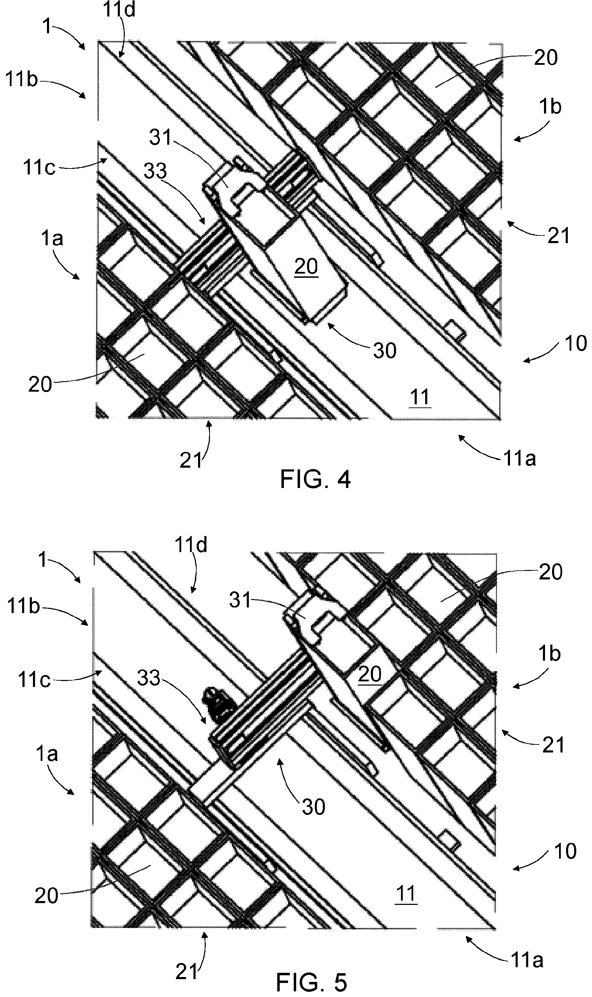

Figures 4 and 5 show schematically, and obliquely from above, a second storage system 10 to increase the degree of filling of the storage 1 relative to the prior art storage system. In the storage system 10 of Figures 4 and 5 the handling mechanism 30 comprises a telescopically movable bar 33 not extending in its initial position shown in Figure 4 over the side edges 11c, 11d of the crosswise conveyor 11 up to areas intended for the rows of the storage units 20 right next to the crosswise conveyor 10. The handling means 31 of the handling mechanism 30 is arranged to move along the telescopically movable bar 33 over the side edges 11c, 11d of the crosswise conveyor 11 up to the areas intended for the rows of the storage units 20 right next to the crosswise conveyor 11 substantially perpendicularly to the crosswise conveyor 11, in a manner as shown in Figure 5. The handling mechanism 30 is arranged to move the received storage unit 20 from the crosswise conveyor 11 into the storage 1 with the movement of the telescopically movable bar 33 and the handling means 31 substantially perpendicular to the longitudinal direction of the crosswise conveyor 11. In the same way as the handling mechanism 30 of Figures 1 and 2, the handling mechanism 30 of Figures 4 and 5 is arranged to become detached from the storage unit 20 loaded into the storage 1 by moving the handling mechanism 30 towards the second end 11b of the crosswise conveyor 11. However, other implementations of the handling mechanism 30, wherein the handling mechanism 30 is arranged to become detached from the storage unit 20 loaded into the storage 1 by moving at least one of the handling mechanism 30 or the handling means 31 towards the second end 11b of the crosswise conveyor 11, are also applicable. Alternatively, the handling mechanism 30 of Figures 4 and 5 may also be equipped with handling means that do not require any movement of the at least one of the handling mechanism or the handling means towards the second end 11b of the crosswise conveyor 11 for the handling mechanism becoming detached from the storage unit 20 loaded into the storage 1. Furthermore, other kind of handling mechanisms with handling means without the handling mechanism substantially extending in its initial position over the side edges 11c, 11d of the crosswise conveyor 11 up to areas intended for the rows of the storage units 20 right next to the crosswise conveyor 11 are also applicable.

According to an embodiment of the storage system 10 of Figures 4 and 5, to avoid leaving a free area without any storage units 20 right next to the crosswise conveyor 11 on any side of the crosswise conveyor 11 in the longitudinal direction thereof in the storage system 10, in response to a free area for a single row 21 of the storage units 20 being available right next to the crosswise conveyor 11 on opposite sides of the crosswise conveyor 11 in the longitudinal direction thereof, the control system 40 is configured to control the operation of the handling mechanism 30 to position the storage units 20 on opposite sides of the crosswise conveyor 11 in one row 21 on one side of the crosswise conveyor 11 at a time to increase the degree of filling of the storage 1.

To implement the handling mechanism 30 to position the storage units 20 on opposite sides of the crosswise conveyor 11 in one row 21 on one side of the crosswise conveyor 11 at a time in the storage system of Figures 4 and 5 during loading of the storage units 20 into the storage 1, the control system 40 is configured, in response to free areas for single rows 21 of the storage units 20 being available right next to the crosswise conveyor 11 on opposite sides of the crosswise conveyor 11 in the longitudinal direction thereof:
- to control the handling mechanism 30 to receive the first storage unit 20 travelling on the crosswise conveyor 11 by the handling means 31 positioned at the crosswise conveyor 11,
- to control the handling mechanism 30 to move the received first storage unit 20 from the crosswise conveyor 11 to the free area on one side of the crosswise conveyor 11, preferably starting substantially at the first end 11a of the crosswise conveyor 11,

- to control the handling mechanism 30 to return the handling means 31 back at the crosswise conveyor 11 to receive a second storage unit travelling on the crosswise conveyor 11,
- to control the handling mechanism 30 to receive the second storage unit 20 travelling on the crosswise conveyor 11,
- to control the handling mechanism 30 to move the received second storage unit 20 from the crosswise conveyor 11 on the same side of the crosswise conveyor 11 as the first storage unit 20 loaded into the storage 1, and
- to control the handling mechanism 30 to repeat the loading of the storage units 20 on the same side of the crosswise conveyor 11 until the free area for the row 21 of the storage units 20 on the said side of the crosswise conveyor 11 is filled with the storage units 20, or until all the storage units 20 to be loaded into the storage 1 have been loaded into the storage 1.

According to this embodiment of the storage system of Figures 4 and 5 the handling mechanism 30 is thus arranged to load the storage units 20 in one row 21 on one side of the crosswise conveyor 11 at a time. The control system 40 is configured to control the handling mechanism 30 to continue the loading of the storage units 20 in the same row 21 on the same side of the crosswise conveyor 11 until the free area for the row 21 of the storage units 20 on the said side of the crosswise conveyor 11 is filled with the storage units 20, or until all the storage units 20 to be loaded into the storage 1 have been loaded into the storage 1. In response to the said side of the crosswise conveyor 11 being filled with the storage units 20 the control system 40 is configured:
- to control the handling mechanism 30 to load the storage units 20 to the free area on the opposite side of the crosswise conveyor 11 in the similar manner until the free area for the row 21 of the storage units 20 on the opposite side of the crosswise conveyor 11 is filled with the storage units 20, or until all the storage units 20 to be loaded into the storage 1 have been loaded into the storage 1.

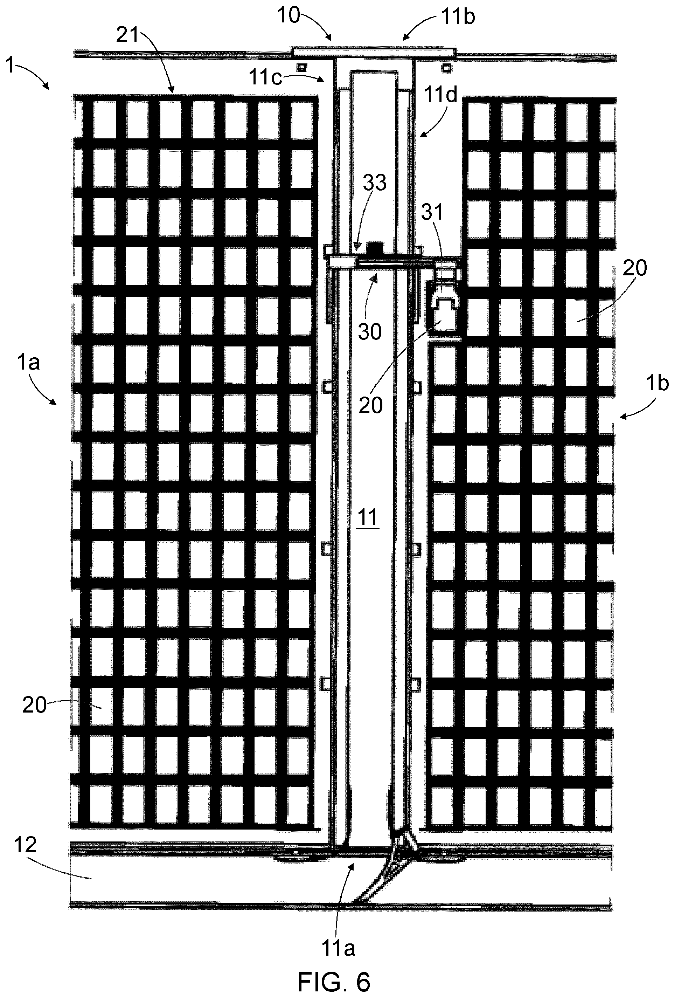

This embodiment of the storage system of Figures 4 and 5 to increase the degree of filling of the storage 1 is clarified by Figure 6. Figure 6 schematically discloses from above the loading of the storage units 20 into the storage 1 at an operating situation of the storage system 10, wherein the storage 1 is already full of the storage units 20 on the side of the first storage area 1a, also right next to the crosswise conveyor 11 on the side of the first side edge 11c of the crosswise conveyor 11, and wherein the loading of the storage units 20 into the storage 1 is further continued on the side of the second storage area 1b on the free area right next to the crosswise conveyor 11 on the side of the second side edge 11d of the crosswise conveyor 11. The storage system 10 of Figures 4 to 6 discussed herein thus also provides the increase of the degree of filling of the storage 1 relative to the prior art storage system but without any specific need for the control system 40 to comprise different operation modes discussed above.

According to another embodiment to implement the handling mechanism 30 to position the storage units 20 on opposite sides of the crosswise conveyor 11 in one row 21 on one side of the crosswise conveyor 11 at a time in the storage system of Figures 4 and 5 during loading of the storage units 20 into the storage 1, the control system 40 is configured, in response to free areas for single rows 21 of the storage units 20 being available right next to the crosswise conveyor 11 on opposite sides of the crosswise conveyor 11 in the longitudinal direction thereof:
- to control the handling mechanism 30 to receive the first storage unit 20 travelling on the crosswise conveyor 11 by the handling means 31 positioned at the crosswise conveyor 11,
- to control the handling mechanism 30 to move the received first storage unit 20 from the crosswise conveyor 11 to the free area on one side of the crosswise conveyor 11, preferably starting substantially at the first end 11a of the crosswise conveyor 11,
- to control the handling mechanism 30 to return the handling means 31 back at the crosswise conveyor 11 to receive a second storage unit travelling on the crosswise conveyor 11,
- to control the handling mechanism 30 to receive the second storage unit 20 travelling on the crosswise conveyor 11,
- to control the handling mechanism 30 to move the received second storage unit 20 from the crosswise conveyor 11 on the same side of the crosswise conveyor 11 as the first storage unit 20 loaded into the storage 1,
- to control the handling mechanism 30 to repeat the loading of the storage units 20 on the same side of the crosswise conveyor 11 until a first predetermined number of the storage units 20 have been loaded on the said side of the crosswise conveyor 11, and
- to control the handling mechanism 30 to start to load storage units 20 on the opposite side of the crosswise conveyor 11 in a similar fashion until all the storage units 20 to be loaded into the storage 1 have been loaded into the storage 1 or until a second predetermined number of the storage units 20 have been loaded on the said side of the crosswise conveyor 11, wherein the first and the second predetermined numbers of the storage units 20 may be equal to each other or different from each other.

According to this embodiment of the storage system of Figures 4 and 5 the handling mechanism 30 is thus arranged to load the storage units 20 in one row 21 on one side of the crosswise conveyor 11 at a time. The control system 40 is configured to control the handling mechanism 30 to continue the loading of the storage units 20 in the same row 21 on the same side of the crosswise conveyor 11 until the predetermined number of the storage units 20 on the said side of the crosswise conveyor 11 have been loaded on the said side of the crosswise conveyor 11. The loading of the storage units 20 into the storage 1 may then be continued by loading the storage units 20 on the opposite side of the crosswise conveyor 11 in the similar fashion until all the storage units 20 to be loaded into the storage 1 have been loaded into the storage 1 or until the second predetermined number of the storage units 20 have been loaded on the said side of the crosswise conveyor 11. According to this embodiment, neither side of the crosswise conveyor 11 is not necessarily completely filled with the storage units 20 in response to the free areas for single rows 21 of the storage units 20 being available right next to the crosswise conveyor 11 on opposite sides of the crosswise conveyor 11 in the longitudinal direction thereof.

According to another embodiment of the storage system 10 of Figures 4 and 5, to avoid leaving a free area without any storage units 20 right next to the crosswise conveyor 11 on any side of the crosswise conveyor 11 in the longitudinal direction thereof in the storage system 10 in response to free areas for single rows 21 of the storage units 20 being available right next to the crosswise conveyor 11 on opposite sides of the crosswise conveyor 11 in the longitudinal direction thereof during loading of the storage units 20 into the storage 1, the control system 40 is configured to control the operation of the handling mechanism 30 to position the storage units 20 in a specified order to opposite positions in rows on opposite sides of the crosswise conveyor 11 to increase a degree of filling of the storage 1.

To implement the handling mechanism 30 to position the storage units 20 right next to the crosswise conveyor 11 in a specified order to the opposite positions on the opposite sides of the crosswise conveyor 11 in the storage system of Figures 4 and 5, the control system 40 is configured, in response to free areas for single rows 21 of the storage units 20 being available right next to the crosswise conveyor 11 on the opposite sides of the crosswise conveyor 11 in the longitudinal direction thereof:
- to control the handling mechanism 30 to receive a first storage unit 20 travelling on the crosswise conveyor 11 by the handling means 31 positioned at the crosswise conveyor 11,
- to control the handling mechanism 30 to move the received first storage unit 20 from the crosswise conveyor 11 to the free area on one side of the crosswise conveyor 11, preferably starting substantially at the first end 11a of the crosswise conveyor 11,to control the handling mechanism 30 to return the handling means 31 back at the crosswise conveyor 11 to receive a second storage unit 20 travelling on the crosswise conveyor 11,to control the handling mechanism 30 to receive the second storage unit 20 travelling on the crosswise conveyor 11,
- to control the handling mechanism 30 to move the received second storage unit 20 from the crosswise conveyor 11 to the free area on an opposite side of the crosswise conveyor 11 substantially oppositely to the first storage unit 20 loaded into the storage 1, and
- to control the handling mechanism 30 to return the handling means 31 back at the crosswise conveyor 11 for receiving a next storage unit 20 to be loaded into the storage 1.

In the storage system of Figures 4 and 5, wherein the storage units 20 are positioned in a specified order to the opposite positions in the rows on the opposite sides of the crosswise conveyor 11, the control system 40 is configured to control the handling mechanism 30 to continue the loading of the storage units 20 to the opposite positions in the rows on the opposite sides of the crosswise conveyor 11 such that at any time there is a maximum of one storage unit 20 difference in the number of the storage units 20 on the opposite sides of the crosswise conveyor 11.

According to an embodiment of the storage system of Figures 4 and 5, wherein at any time there is the maximum of one storage unit 20 difference in the number of the storage units 20 on the opposite sides of the crosswise conveyor 11, the control system 40 is configured to, after receiving the first storage unit 20 travelling on the crosswise conveyor 11 by the handling means 31 positioned at the crosswise conveyor 11, to continue the loading of the next storage units 20 such that always two consecutive storage units 20 will be positioned on the same side of the crosswise conveyor 11 before the next two storage units 20 will be positioned on the opposite side of the crosswise conveyor 11. The control system 40 is configured to control the handling mechanism 30 to continue the loading of the storage units 20 to the free areas on both sides of the crosswise conveyor 11 until the free areas for the row 21 of the storage units 20 on both sides of the crosswise conveyor 11 are filled with the storage units 20, or until all the storage units 20 to be loaded into the storage 1 have been loaded into the storage 1.

According to an embodiment of the storage system of Figures 4 and 5, wherein at any time there is the maximum of one storage unit 20 difference in the number of the storage units 20 on the opposite sides of the crosswise conveyor 11, the handling mechanism 30 is arranged to load the storage units 20 in turns on both sides of the crosswise conveyor 11 in the longitudinal direction thereof. According to this embodiment, the control system 40 is configured to control the handling mechanism 30 to continue the loading of the storage units 20 in turns to the free areas right next to the crosswise conveyor 11 to the opposite positions on both sides of the crosswise conveyor 11 until the free areas for the row 21 of the storage units 20 on both sides of the crosswise conveyor 11 are filled with the storage units 20, or until all the storage units 20 to be loaded into the storage 1 have been loaded into the storage 1.

Operationally, the embodiments of the storage system 10 of Figures 4 and 5, with the characteristic of the maximum of one storage unit 20 difference in the number of the storage units 20 on the opposite sides of the crosswise conveyor 11 at any time, are thus somewhat like the storage system of Figures 1 and 2 above, also providing the increase of the degree of filling of the storage 1 relative to the prior art storage system.

According to all the embodiments of the storage system 10 of Figures 4 and 5, the control system 40 may thus also comprise for the loading of the storage units 20 into the storage 1 two operation modes, i.e., the first operation mode configured to control the storage system 10 until there is the free area for only the single complete row 21 of the storage units 20 available right next to the crosswise conveyor 11 on opposite sides of the crosswise conveyor 11 in the longitudinal direction thereof, and the second operation mode configured to control the storage system 10 after receiving an indication that there is the free area for only the single complete row 21 of the storage units 20 available right next to the crosswise conveyor 11 on opposite sides of the crosswise conveyor 11 in the longitudinal direction thereof.

According to an embodiment of the storage system 10, in response to the base 2 of the storage 1 being filled with the storage units 20, the control system 40 is configured to control the operation of at least one of the at least one lengthwise conveyor 12 or the at least one crosswise conveyor 11 to load the storage units 20 on at least one of the at least one lengthwise conveyor 12 or the at least one crosswise conveyor 11. When the storage units 20 are stored on at least one of the at least one lengthwise conveyor 12 or the at least one crosswise conveyor 11, the degree of filling of the storage 1 relative to the prior art storage system may further be increased.

It will be obvious to a person skilled in the art that, as the technology advances, the inventive concept can be implemented in various ways. The invention and its embodiments are not limited to the examples described above but may vary within the scope of the claims.

## Claims

1. A storage system (10) for loading and unloading storage units (20) stored in successive rows (21) positioned on a base (2) of a storage (1), the storage system (10) comprising
at least one lengthwise conveyor (12) for carrying storage units (20) to be loaded into the storage (1) and to be unloaded from the storage (1),
at least one crosswise conveyor (11) substantially perpendicular to the lengthwise conveyor (12), the crosswise conveyor (11) comprising in a longitudinal direction thereof a first end (11a) and a second end (11b) and being connected at its first end (11a) to the lengthwise conveyor (12) substantially at the same vertical level with the lengthwise conveyor (12) for allowing the storage units (20) to be moved between the lengthwise conveyor (12) and the crosswise conveyor (11), the crosswise conveyor (11) being in a horizontal direction substantially parallel to said storage unit rows (21) and movable above said base (2) of the storage (1) in a direction substantially parallel with the plane of the base (2) of the storage (1) and perpendicular to its own longitudinal direction,
at least one handling mechanism (30) arranged to move along the crosswise conveyor (11) in the longitudinal direction thereof and comprising handling means (31) for grasping the storage unit (20) for loading the storage unit (20) into a row (21) on the base (2) of the storage (1) or vice versa, to unload the storage unit (20) from the row (21) on the base (2) of the storage (1), and
a control system (40) for controlling the operation of the at least one lengthwise conveyor (12), the at least one crosswise conveyor (11) and the at least one handling mechanism (30),
**characterized in that**
in response to a free area for a single row (21) of storage units (20) being available right next to the crosswise conveyor (11) on opposite sides of the crosswise conveyor (11) in the longitudinal direction thereof the control system (40) is configured to control the operation of the at least one handling mechanism (31) to position the storage units (20) on opposite sides of the crosswise conveyor (11) either in one row (21) on one side of the crosswise conveyor (11) at a time, or to opposite positions in the rows (21) on opposite sides of the crosswise conveyor (11) such that at any time there is a maximum of one storage unit difference in the number of the storage units (20) on the opposite sides of the crosswise conveyor (11), to increase a degree of filling of the storage (1).

2. A storage system as claimed in claim 1, **characterized in that** in response to the base (2) of the storage (1) being filled with the storage units (20), the control system (40) is configured to control the operation of at least one of the at least one lengthwise conveyor (12) or the at least one crosswise conveyor (11) to load the storage units (20) on at least one of the at least one lengthwise conveyor (12) or the at least one crosswise conveyor (11).

3. A storage system as claimed in claim 1 or 2, **characterized in that** the handling mechanism (31) comprises a fixed bar (32) that extends substantially perpendicularly to the crosswise conveyor (11) over opposite side edges (11c, 11d) of the crosswise conveyor (11) up to areas intended for rows (2) of storage units (20) right next to the crosswise conveyor (11),
the handling means (31) of the handling mechanism (30) is arranged to move on the fixed bar (32) substantially perpendicularly to the longitudinal direction of the crosswise conveyor (11) up to the areas for the rows (21) right next to the crosswise conveyor (11), and that
the handling means (31) of the handling mechanism (30) is arranged to become detached from the storage unit (20) loaded into the storage (1) by at least moving the handling mechanism (30) towards the second end (11b) of the crosswise conveyor (11).

4. A storage system as claimed in claim 3, **characterized in that** in response to the free areas for the single rows (21) of the storage units (20) being available right next to the crosswise conveyor (11) on opposite sides of the crosswise conveyor (11) in the longitudinal direction thereof the control system (40) is configured:
to control the handling mechanism (30) to receive a first storage unit (20) travelling on the crosswise conveyor (11) by the handling means (31) positioned at the crosswise conveyor (11),
to control the handling mechanism (30) to move the received first storage unit (20) from the crosswise conveyor (11) to the free area on one side of the crosswise conveyor,
to control the handling mechanism (30) to move towards the second end (11b) of the crosswise conveyor (11) until the handling means (31) are detached from the first storage unit (20) loaded on the said side of the crosswise conveyor (11),
to control the handling mechanism (30) to return the handling means (31) back at the crosswise conveyor (11) to receive a second storage unit (20) travelling on the crosswise conveyor (11),
to control the handling mechanism (30) to receive the second storage unit (20) travelling on the crosswise conveyor (11),
to control the handling mechanism (30) to move the received second storage unit (20) from the crosswise conveyor (11) to the free area on an opposite side of the crosswise conveyor (11) substantially oppositely to the first storage unit (20) loaded into the storage (1),
to control the handling mechanism (30) to move towards the second end (11b) of the crosswise conveyor (11) until the handling means (31) are detached from the second storage unit (20) loaded on the said opposite side of the crosswise conveyor (11), and
to control the handling mechanism (30) to return the handling means (31) back at the crosswise conveyor (11) for receiving a next storage unit (20) to be loaded into the storage (1).

5. A storage system as claimed in claim 4, **characterized in that** the control system (40) is configured to control the handling mechanism (30) to continue the loading of the storage units (20) to the opposite positions in the rows (21) on the opposite sides of the crosswise conveyor (11) such that at any time there is a maximum of one storage unit difference in the number of the storage units (20) on the opposite sides of the crosswise conveyor (11).

6. A storage system as claimed in claim 4 or 5,**characterized in that** the control system (40) is configured to control the handling mechanism (30) to continue the loading of the storage units (20) to the free areas in turns to the opposite positions on both sides of the crosswise conveyor (20) until the free areas for the rows (21) of the storage units (20) right next to the crosswise conveyor (11) on both sides of the crosswise conveyor (11) are filled with the storage units (20), or until all the storage units (20) to be loaded into the storage (1) have been loaded into the storage (1).

7. A storage system as claimed in claim 1 or 2,**characterized in that**
the handling mechanism (30) comprises a telescopically movable bar (33) and handling means (31) arranged to move along the telescopically movable bar (33), and that
the handling means (31) of the handling mechanism (30) is arranged to move along the telescopically movable bar (33) over the side edges (11c, 11d) of the crosswise conveyor (11) up to the areas for the rows (21) of the storage units (20) right next to the crosswise conveyor (11) substantially perpendicularly to the crosswise conveyor (11).

8. A storage system as claimed in claim 7, **characterized in that**
the handling mechanism (30) is arranged to become detached from the storage unit (20) loaded into the storage (11) by moving at least one of the handling mechanism (30) or the handling means (31) towards the second end (11b) of the crosswise conveyor (11).

9. A storage system as claimed in claim 7 or 8, **characterized in that** in response to the free areas for the single rows (21) of the storage units (20) being available right next to the crosswise conveyor (11) on opposite sides of the crosswise conveyor (11) in the longitudinal direction thereof the control system (40) is configured:
to control the handling mechanism (30) to receive a first storage unit (20) travelling on the crosswise conveyor (11) by the handling means (31) positioned at the crosswise conveyor (11),
to control the handling mechanism (30) to move the received first storage unit (20) from the crosswise conveyor (11) to the free area on one side of the crosswise conveyor (11),
to control the handling mechanism (30) to return the handling means (31) back at the crosswise conveyor (11) to receive a second storage unit (20) travelling on the crosswise conveyor (11),
to control the handling mechanism (30) to receive the second storage unit (20) travelling on the crosswise conveyor (11),
to control the handling mechanism (30) to move the received second storage unit (20) from the crosswise conveyor (11) to the free area on an opposite side of the crosswise conveyor (11) substantially oppositely to the first storage unit (20) loaded into the storage (1), and
to control the handling mechanism (30) to return the handling means (31) back at the crosswise conveyor (11) for receiving a next storage unit (20) to be loaded into the storage (1).

10. A storage system as claimed in claim 9,**characterized in that** the control system (40) is configured to control the handling mechanism (30) to continue the loading of the storage units (20) to the opposite positions in the rows (21) on the opposite sides of the crosswise conveyor (11) such that at any time there is a maximum of one storage unit difference in the number of the storage units (20) on the opposite sides of the crosswise conveyor (11).

11. A storage system as claimed in claim 9 or 10, **characterized in that** the control system (40) is configured to control the handling mechanism (30) to continue the loading of the storage units (20) to the free areas in turns to the opposite positions on both sides of the crosswise conveyor (11) until the free areas for the rows (21) of the storage units (20) on both sides of the crosswise conveyor (11) are filled with the storage units (20), or until all the storage units (20) to be loaded into the storage (1) have been loaded into the storage (1).

12. A storage system as claimed in claim 7 or 8, **characterized in that**
in response to the free areas for the single rows (21) of the storage units (20) being available right next to the crosswise conveyor (11) on opposite sides of the crosswise conveyor (11) in the longitudinal direction thereof the control system (40) is configured:
to control the handling mechanism (30) to receive a first storage unit (20) travelling on the crosswise conveyor (11) by the handling means (31) positioned at the crosswise conveyor (11),
to control the handling mechanism (30) to move the received first storage unit (20) from the crosswise conveyor (11) to the free area on one side of the crosswise conveyor (11),
to control the handling mechanism (30) to return the handling means (31) back at the crosswise conveyor (11) to receive a second storage unit (20) travelling on the crosswise conveyor (11),
to control the handling mechanism (30) to receive the second storage unit (20) travelling on the crosswise conveyor (11),
to control the handling mechanism (30) to move the received second storage unit (20) from the crosswise conveyor (11) on the same side of the crosswise conveyor (11) as the first storage unit (20) loaded into the storage (1), and
to control the handling mechanism (30) to repeat the loading of the storage units (20) on the same side of the crosswise conveyor (11) until the free area for the row (21) of the storage units (21) on the said side of the crosswise conveyor (11) is filled with the storage units (20), or until all the storage units (20) to be loaded into the storage (1) have been loaded into the storage (1).

13. A storage system as claimed in claim 12, **characterized in that** in response to the said side of the crosswise conveyor (11) being filled with the storage units (20) the control system (40) is configured:
to control the handling mechanism (30) to load the storage units (21) to the free area on the opposite side of the crosswise conveyor (11) in the similar manner until the free area for the row (21) of the storage units (20) on the opposite side of the crosswise conveyor (11) is filled with the storage units (20), or until all the storage units (20) to be loaded into the storage (1) have been loaded into the storage (1).
